# EUROPÄISCHE PATENTSCHRIFT

(11) **EP 3 783 269 B1**
(45) Veröffentlichungstag und Bekanntmachung des Hinweises auf die Patenterteilung: **11.10.2023**
(21) Anmeldenummer: 20189617.2
(22) Anmeldetag: 05.08.2020
(51) Int. Cl.: F16K 37/00, F24D 17/00, F24D 19/10, F16K 31/02

(54) **VERFAHREN ZUM BETREIBEN EINER TRINKWASSERANLAGE, TRINKWASSERANLAGE UND STEUEREINRICHTUNG**
METHOD FOR OPERATING A DRINKING WATER PLANT, DRINKING WATER PLANT AND CONTROL DEVICE
PROCÉDÉ DE FONCTIONNEMENT D'UNE INSTALLATION D'EAU POTABLE, INSTALLATION D'EAU POTABLE ET DISPOSITIF DE COMMANDE

(30) Priorität: 19.08.2019 DE 102019122225
(43) Veröffentlichungstag der Anmeldung: 24.02.2021
(73) Patentinhaber: Solvis GmbH, 38112 Braunschweig (DE)
(72) Erfinder: JÄGER, Helmut, 38533 Vordorf (DE)
(74) Vertreter: Gramm, Lins & Partner Patent- und Rechtsanwälte PartGmbB

(56) Entgegenhaltungen:
- EP-A1- 1 681 515
- EP-B1- 1 681 515
- DE-A1- 3 522 344
- DE-A1- 19 932 436
- DE-A1-102005 025 501
- DE-A1-102016 001 940
- DE-A1-102016 011 100
- DE-A1-102016 106 817
- DE-A1-102017 010 893
- DE-C2- 3 522 344
- DE-C2- 19 932 436

## Beschreibung

Die Erfindung betrifft ein Verfahren zum Betreiben einer Trinkwasseranlage, die eine Warmwasser-Leitung mit wenigstens einer Abzweigleitung, und eine Steuereinrichtung mit wenigstens einem Temperatursensor zum Bestimmen der Wassertemperatur in der Warmwasser-Leitung, einem Energiewandler zum Umwandeln thermischer Energie oder kinetischer Energie in elektrische Energie, wenigstens einem steuerbaren Ventil und einer Kommunikationseinrichtung aufweist, wobei bei dem Verfahren die Wassertemperatur mittels des Temperatursensors gemessen und mittels der Kommunikationseinrichtung drahtlos an eine elektronische Datenverarbeitungseinrichtung übermittelt wird. Ein Steuersignal wird an die Kommunikationseinrichtung der Steuereinrichtung übermittelt und das steuerbare Ventil wird in Abhängigkeit des übermittelten Steuersignals gesteuert, wobei die für den Temperatursensor und die Kommunikationseinrichtung nötige elektrische Energie durch den Energiewandler erzeugt wird.. Die Erfindung betrifft zudem eine entsprechende Trinkwasseranlage sowie eine Steuereinrichtung für eine Trinkwasseranlage.

Ein gattungsgemäßes Verfahren ist beispielsweise aus der DE 10 2016 106 817 A1 bekannt.

Trinkwasseranlagen mit einer Warmwasserversorgung sind insbesondere in größeren Häusern und Gebäuden mit einer Warmwasser-Leitung, insbesondere einer Warmwasser-Zirkulationsleitung ausgerüstet, in der das warme Wasser zirkuliert, um den Komfort und die Hygiene für den Endbenutzer, der beispielsweise aus einem Wasserhahn Warmwasser entnimmt, sicherzustellen. Insbesondere für den Fall, dass die Warmwasser-Leitung wenigstens eine Abzweigleitung aufweist, muss sichergestellt sein, dass in die unterschiedlichen Zweige der Warmwasser-Leitung eine ausreichende Menge warmen Trinkwassers eingeleitet wird. Daher sind zumindest an den Abzweigleitungen, an denen sich die Warmwasser-Leitung verzweigte, Ventile angeordnet, um den Wasserstrom in die unterschiedlichen Abzweigungen steuern und einstellen zu können. Dies gilt sowohl für Warmwasser-Zirkulationsleitungen, in denen das warme Trinkwasser ohnehin zirkuliert, als auch für normale Warmwasser-Leitungen, die beispielsweise mit einer Spülautomatik ausgerüstet sind.

Derartige Trinkwasseranlagen können für mehrere Gebäude ausgebildet sein und über mehrere Abzweigleitungen verfügen. Eine Gesamtlänge beispielsweise einer Warmwasser-Zirkulationsleitung von mehreren 100 m ist keine Seltenheit. In der Regel befindet sich eine Pumpe, die das Warmwasser durch die Zirkulationsleitung pumpt, im Keller eines der zu versorgenden Häuser. Da die Warmwasser-Leitung sich vorzugsweise auch über mehrere Stockwerke des zu versorgenden Gebäudes erstreckt, muss eine ausreichende Pumpleistung bereitgestellt werden, um das Warmwasser in der Zirkulationsleitung ausreichend zirkulieren zu lassen.

Da die Ausgestaltung der Warmwasser-Leitung, insbesondere der Warmwasser-Zirkulationsleitung, also der zu überwindende Höhenunterschied sowie die Länge und die Position und Anzahl von Abzweigleitungen, bekannt sind, lässt sich zumindest prinzipiell ausrechnen, wie die einzelnen Ventile eingestellt werden müssen, um eine möglichst optimale Verteilung des Warmwassers in der Leitung bereitstellen zu können. Aus dem Stand der Technik sind daher für die Anwendung in der Warmwasser-Zirkulationsleitung statische Ventile bekannt, die auf den einmal ausgerechneten Wert eingestellt, ansonsten jedoch nicht oder allenfalls manuell auf geänderte Situationen eingestellt werden. Um zu überprüfen, ob die Ventile ihre Funktion erfüllen, sind sie in der Regel mit Zeigerthermometern ausgerüstet, sodass die Temperatur im Inneren der Warmwasser-Zirkulationsleitung leicht abgelesen werden kann. Nachteilig ist jedoch, dass dazu die Zeigerthermometer am Ort der Ventile abgelesen werden müssen und manuell eine Einstellung vorzunehmen ist, sofern dies nötig ist. Nachteilig ist zudem, dass sich die Ventile gegebenenfalls in Abhängigkeit einer Umgebungstemperatur verstellen, weil sich beispielsweise ein Durchfluss-Begrenzungselement, das Teil des Ventils ist und den Durchfluss durch das Ventil begrenzt, bei einer erhöhten Temperatur ausdehnt und so den Durchfluss verringert. Dies lässt sich durch manuelle Einstellungen kaum verhindern, sofern diese nicht bei jeder nennenswerten Temperaturänderung durchgeführt werden sollen.

Aus dem Stand der Technik sind daher thermostatische Ventile bekannt, die über einen Dehnstoffkörper verfügen. Dieser wirkt als Durchfluss-Begrenzungselement, wobei in diesem Fall die Temperaturabhängigkeit der Ausdehnung des Dehnstoffkörpers genutzt wird, um den Durchfluss des Trinkwassers durch das thermostatische Ventil in Abhängigkeit der Wassertemperatur einzustellen. Auch bei diesen Ventilen muss jedoch in regelmäßigen Abständen kontrolliert werden, ob sie ihre Funktion noch erfüllen oder ob sie beispielsweise aufgrund von Fehlfunktionen ausgewechselt oder gewartet werden müssen. Auch dies kann nur geschehen, indem die dafür zuständige Person jedes der Ventile aufsucht. Dies kann insbesondere bei großen Gebäuden, Gebäudekomplexen oder Gebäudegruppen, die durch eine einzige Trinkwasseranlage mit einer einzigen Warmwasser-Zirkulationsleitung verbunden und versorgt werden, aufwendig und gegebenenfalls schwierig sein.

Um dieses Problem zu lösen, werden im Stand der Technik elektronische Zirkulationsventile verwendet, die einen elektronischen Temperatursensor sowie einen elektromechanische Stellantrieb aufweisen. Sie sind über Kabel mit einer elektronischen Datenverarbeitungseinrichtung sowie einer Stromquelle verbunden. Die Stromquelle stellt die benötigte elektrische Energie bereit. Die elektronische Datenverarbeitungseinrichtung wertet die von den Temperatursensoren der unterschiedlichen Zirkulationsventile erfassten Daten aus und kann auf diese Weise erkennen oder auswerten, ob die Zirkulationsventile weiterhin in der richtigen Position stehen und gewünschte Temperaturprofile erfüllt werden. Sollte dies nicht der Fall sein, ist die elektronische Datenverarbeitungseinrichtung eingerichtet, Steuersignale über die Kabel an die elektromagnetischen Stellantriebe zusenden und die Ventile und ihre Position anzupassen und zu steuern.

Nachteilig bei dieser Ausgestaltung ist jedoch, dass die unterschiedlichen elektronischen Zirkulationsventile über Kabel miteinander und insbesondere mit der elektronischen Datenverarbeitungseinrichtung und der Stromquelle zu verbinden sind. Während dies bei Neubauten eingeplant und entsprechend umgesetzt werden kann, ist eine Nachrüstung bereits bestehender Gebäudekomplexe mit dieser Art von Zirkulationsventile nur schwer und unter großem baulichen Aufwand möglich. Gegebenenfalls müssen Brandschutzwände durchbrochen, Wege überquert oder unterquert werden.

Aus dem Stand der Technik, beispielsweise der DE 10 2005 025 501 A1, ist ein Thermostat-Ventil bekannt, dass über einen thermoelektrischen Generator verfügt, der aus der Temperaturdifferenz zwischen dem warmen Wasser innerhalb der Leitung und der Umgebung Strom erzeugt. Ein solches Thermostat-Ventil kann für Heizkörper in geschlossenen Räumen verwendet werden, wobei das Ventil selbst ein Steuermodul beinhaltet, dass in der Lage ist, einen elektronischen Stellantrieb in Abhängigkeit einer detektierten Temperatur, beispielsweise der Raumtemperatur des Raumes, in dem sich der Heizkörper befindet, zu steuern.

Der Erfindung liegt daher die Aufgabe zugrunde, ein Verfahren zum Betreiben einer Trinkwasseranlage sowie eine Trinkwasseranlage und eine Steuerungseinrichtung für eine solche Trinkwasseranlage so weiterzuentwickeln, dass sie ohne großen Aufwand installiert, gewartet und überprüft werden kann, auf Veränderungen möglichst selbsttätig reagiert und so ausgebildet ist, dass auch bestehende Gebäude und Gebäudekomplexe einfach und ohne großen Aufwand nachgerüstet werden können.

Die Erfindung löst die gestellte Aufgabe durch ein Verfahren zum Betreiben einer Trinkwasseranlage gemäß dem Oberbegriff des Anspruchs 1, das sich dadurch auszeichnet, dass die Kommunikationseinrichtung eine LORA-Schnittstelle und die Steuereinrichtung einen elektrischen Energiespeicher aufweist.

Der Erfindung liegt die überraschende Erkenntnis zugrunde, dass der durch den Energiewandler erzeugte elektrische Strom ausreichend ist, um nicht nur einen Temperatursensor zum Bestimmen der Wassertemperatur innerhalb der Warmwasser-Leitung, sondern zusätzlich auch eine Kommunikationseinrichtung zu betreiben.

Der Energiewandler weist bevorzugt eine Turbine auf, die in die Warmwasser-Leitung einsetzbar ist. Das Trinkwasser, das durch die Warmwasser-Leitung fließt, bewegt die Turbine und betreibt damit einen kleinen Generator, der diese Bewegung, die aus der Bewegung des Trinkwassers stammt, in elektrischen Strom umwandelt.

Alternativ oder zusätzlich dazu verfügt der Energiewandler über ein thermoelektrisches Element, das aus einer Temperaturdifferenz einen elektrischen Strom erzeugt.

Der Temperatursensor, der Teil der Steuereinrichtung ist, misst die Wassertemperatur im Innern der Warmwasser-Leitung und übermittelt diese erfassten Daten mittels der Kommunikationseinrichtung drahtlos an eine elektronische Datenverarbeitungseinrichtung. Dazu kann die Steuereinrichtung einen Prozessor, beispielsweise einen Mikroprozessor, und einen elektronischen Datenspeicher aufweisen. Die vom Temperatursensor gemessenen Temperaturen können in dem elektronischen Datenspeicher so lange gespeichert werden, bis sie mittels der Kommunikationseinrichtung an die elektronische Datenverarbeitungseinrichtung übermittelt werden. Dieser Prozess wird von einem Prozessor, der Teil der Steuereinrichtung ist, gesteuert und durchgeführt.

Die elektronische Datenverarbeitungseinrichtung kann Teil der Trinkwasseranlage sein, wobei dies nicht zwangsläufig der Fall ist. Die elektronische Datenverarbeitungseinrichtung befindet sich vorzugsweise in einem Kellerraum oder einer anderen zentral zugänglichen Stelle des Gebäudes oder der Gebäudegruppe, deren Trinkwasseranlage zu betreiben ist. Zwischen dem Temperatursensor und der Kommunikationseinrichtung einerseits und der elektronischen Datenverarbeitungseinrichtung andererseits können sich daher Brandschutzwände, normale Wände und sonstige bauliche Elemente befinden. Der Abstand zwischen der Kommunikationseinrichtung der Steuereinrichtung und der elektronischen Datenverarbeitungseinrichtung kann beispielsweise mehr als 10 m, insbesondere mehr als 50 m, bei besonders großen Anlagen auch mehr als 100 m betragen. Bevorzugt erhält die elektronische Datenverarbeitungseinrichtung die von dem Temperatursensor ermittelten Werte und wertet diese aus, indem sie beispielsweise die gemessenen Temperaturen mit in einem elektronischen Datenspeicher hinterlegten Soll-Werten vergleicht. Ist die Abweichung größer als ein vorbestimmter Grenzwert, werden Steuersignale von der elektronischen Datenverarbeitungseinrichtung an die Kommunikationseinrichtung übermittelt, die diese Steuersignale weiterleitet und so dafür sorgt, dass das steuerbare Ventil in Abhängigkeit dieser Steuersignale gesteuert wird.

Alternativ oder zusätzlich dazu kann auch die Steuereinrichtung über einen elektronischen Datenspeicher verfügen, der die vom Temperatursensor gemessenen Werte solange speichert, bis sie an die elektronische Datenverarbeitungseinrichtung weitergeleitet werden. Dies kann auf Anforderung insbesondere durch die elektronische Datenverarbeitungseinrichtung, oder automatisiert zu bestimmten Tageszeiten geschehen. Alternativ oder zusätzlich dazu können die vom Temperatursensor erfassten und gemessenen Werte mittels der Kommunikationseinrichtung auch an einen zentralen elektronischen Datenspeicher übermittelt werden, der Teil einer gegebenenfalls nicht permanent angeschlossenen elektronischen Datenverarbeitungseinrichtung ist. Eine Person, die die ordnungsgemäße Funktion aller zur Steuerung und zum Betreiben der Trinkwasseranlage benötigten Bauteile testen und überprüfen möchte, kann dann beispielsweise durch eine mobile elektronische Datenverarbeitungseinrichtung, beispielsweise einen Laptop, die mit dem elektronischen Datenspeicher verbunden wird, die Daten auslesen und extern auswerten.

Handelt es sich bei dem Energiewandler um ein thermoelektrisches Element, benötigt es eine Temperaturdifferenz zwischen zwei Enden des thermoelektrischen Elementes, um einen elektrischen Strom und eine elektrische Spannung zu erzeugen. Diese Temperaturdifferenz sollte möglichst groß sein, um einen ausreichenden elektrischen Strom und eine elektrische Spannung erzeugen zu können. Vorzugsweise wird für die warme Seite die Warmwasser-Leitung oder das in der Warmwasser-Leitung enthaltene warme Wasser verwendet. Für die kalte Seite kann die Umgebungstemperatur ausreichend sein. Um eine größere Temperaturdifferenz herbeizuführen kann auch eine gegebenenfalls vorhandene Kaltwasser-Leitung verwendet werden.

Bevorzugt handelt es sich bei der Warmwasser-Leitung um eine Warmwasser-Zirkulationsleitung.

Vorzugsweise vergleicht die elektronische Datenverarbeitungseinrichtung die gemessene Wassertemperatur mit einer hinterlegten Soll-Temperatur, wobei das Steuersignal in Abhängigkeit des Ergebnisses dieses Vergleichs übermittelt wird. Die Soll-Temperatur kann in einem elektronischen Datenspeicher hinterlegt sein, der Teil der elektronischen Datenverarbeitungseinrichtung ist. Verfügt die Trinkwasseranlage über mehrere Abzweigleitungen und somit auch über mehrere Steuereinrichtungen ist es möglich, für unterschiedliche Steuereinrichtungen unterschiedliche Soll-Temperaturen zu hinterlegen. Alternativ oder zusätzlich dazu kann die jeweilige Soll-Temperatur auch in einem elektronischen Datenspeicher hinterlegt sein, der Teil der Steuereinrichtung ist. In diesem Fall kann die Steuereinrichtung mittels der Kommunikationseinrichtung sowohl die gemessene Wassertemperatur als auch die Soll-Temperatur an die elektronische Datenverarbeitungseinrichtung übermitteln.

Vorzugsweise verfügt das steuerbare Ventil über einen elektromechanischen Antrieb, der beispielsweise als Stellantrieb ausgebildet ist, über den das Ventil mehr oder weniger geschlossen oder geöffnet werden kann. Zum Betreiben dieses Antriebs wird ebenfalls ein elektrischer Strom und eine elektrische Spannung benötigt, die bevorzugt ebenfalls durch den Energiewandler bereitgestellt wird.

In einer bevorzugten Ausgestaltung des Verfahrens ist die Steuereinrichtung an der Abzweigleitung angeordnet, sodass durch das steuerbare Ventil eine Durchflussmenge durch die Abzweigleitung steuerbar ist.

Bevorzugt verfügt die Warmwasser-Leitung über mehrere Abzweigleitungen, wobei an vorzugsweise jeder Abzweigleitung eine Steuereinrichtung angeordnet ist. Vorzugsweise sind die verschiedenen Steuereinrichtungen an den unterschiedlichen Abzweigleitungen gleich aufgebaut, verfügen also jeweils über wenigstens einen Temperatursensor, einen Energiewandler, ein steuerbares Ventil und eine Kommunikationseinrichtung.

Vorzugsweise ist die Kommunikationseinrichtung eingerichtet, durch wenigstens eine Mauer, bevorzugt wenigstens eine Brandschutzmauer, drahtlos mit der elektronischen Datenverarbeitungseinrichtung zu kommunizieren. Alternativ oder zusätzlich dazu ist die Kommunikationseinrichtung eingerichtet, mit einer anderen Kommunikationseinrichtung einer anderen Steuereinrichtung zu kommunizieren. Dies ist insbesondere dann von Vorteil, wenn die Warmwasser-Leitung sich in eine bestimmte Richtung sehr weit erstreckt und der Abstand zwischen den Kommunikationseinrichtungen der verschiedenen Steuereinrichtungen von der elektronischen Datenverarbeitungseinrichtung sehr groß ist. In diesem Fall kann Energie gespart werden, indem die Kommunikationseinrichtung nicht direkt mit der elektronischen Datenverarbeitungseinrichtung, sondern nur mit benachbarten Kommunikationseinrichtungen kommuniziert, die die durch diese Kommunikation erhaltenen Daten entweder an eine weitere Kommunikationseinrichtung einer Steuereinrichtung oder direkt an die elektronische Datenverarbeitungseinrichtung weitergeben. Auf diese Weise wird für die von der Datenverarbeitungseinrichtung weit entfernten Steuereinrichtungen die benötigte Sendeleistung und damit die benötigte elektrische Energiemenge reduziert.

Die Erfindung löst die gestellte Aufgabe zudem durch eine Trinkwasseranlage mit einer Warmwasser-Leitung mit wenigstens einer Abzweigleitung, einer elektronischen Datenverarbeitungseinrichtung und einer Steuereinrichtung, die einen Temperatursensor zum Bestimmen der Wassertemperatur in der Warmwasser-Leitung, einen Energiewandler zum Umwandeln thermischer Energie oder kinetischer Energie in elektrische Energie, einen elektrischen Energiespeicher, ein steuerbares Ventil und eine Kommunikationseinrichtung mit einer LORA-Schnittstelle aufweist, wobei die Trinkwasseranlage eingerichtet ist zum Durchführen eines der hier beschriebenen Verfahren. Dies betrifft insbesondere die elektronische Datenverarbeitungseinrichtung, die eingerichtet ist, Daten, die sie von einer Kommunikationseinrichtung einer Steuereinrichtung erhält, auszuwerten, gegebenenfalls mit hinterlegten Soll-Werten zu vergleichen und wenn nötig Steuersignale zu generieren, die anschließend der Kommunikationseinrichtung übermittelt werden.

Die Steuereinrichtung selbst verfügt vorzugsweise ebenfalls über eine elektronische Datenverarbeitungseinrichtung, die eingerichtet ist, die übermittelten Steuersignale zu empfangen und so umzusetzen, dass das steuerbare Ventil damit angesteuert werden kann.

Vorzugsweise verfügt die Zirkulationsleitung über mehrere Abzweigleitungen, wobei besonders bevorzugt an jeder Abzweigleitung eine entsprechende Steuereinrichtung angeordnet ist, wobei sich die Abzweigleitungen bevorzugt in unterschiedlichen Gebäuden, in unterschiedlichen Räumen und/oder in unterschiedlichen Brandabschnitten befinden.

Die Erfindung löst die gestellte Aufgabe zudem durch eine Steuereinrichtung für eine derartige Trinkwasseranlage. Die Steuereinrichtung verfügt über wenigstens einen Temperatursensor, wenigstens einen Energiewandler zum Umwandeln thermischer Energie oder kinetischer Energie in elektrische Energie, einen elektrischen Energiespeicher, wenigstens ein steuerbares Ventil und eine Kommunikationseinrichtung mit einer LORA-Schnittstelle. Die Kommunikationseinrichtung beinhaltet bevorzugt eine elektronische Datenverarbeitungseinrichtung, bevorzugt mit einem elektronischen Datenspeicher, sowie eine Sende- und Empfangseinrichtung für eine drahtlose Kommunikation, sodass beispielsweise Funkwellen übertragen und empfangen werden können.

Bevorzugt verfügt die Kommunikationseinrichtung über eine Schnittstelle für eine drahtlose Kommunikation, insbesondere eine Bluetooth-Schnittstelle und/oder eine WLAN-Schnittstelle. In diesem Fall verfügt auch die elektronische Datenverarbeitungseinrichtung über eine entsprechende Schnittstelle, sodass eine drahtlose Kommunikation möglich ist.

In der erfindungsgemäßen Ausgestaltung verfügt die Steuereinrichtung zudem über einen elektrischen Energiespeicher zum Speichern elektrischer Energie. Dies kann beispielsweise ein Kondensator und/oder einen Akku sein. In diesen elektrischen Energiespeicher kann elektrische Energie gespeichert werden, die durch den Energiewandler, beispielsweise das thermoelektrische Element und/oder die Turbine mit Generator bereitgestellt aber zum Zeitpunkt der Bereitstellung nicht verwendet wird. So ist es beispielsweise denkbar, in den Wintermonaten, in denen die Temperaturdifferenz zwischen warmer Seite und kalter Seite des thermoelektrischen Elementes besonders groß ist, mehr elektrischen Strom zu erzeugen als benötigt wird, der dann in dem elektrischen Energiespeicher gespeichert wird. Dies ist insbesondere dann zutreffend, wenn die kalte Seite des thermoelektrischen Elementes durch die Umgebungstemperatur gegeben ist.

Vorzugsweise verfügt die Steuereinrichtung über einen elektronischen Datenspeicher und eine elektronische Datenverarbeitungseinrichtung, damit die hier beschriebenen Funktionen durchgeführt werden können.

In einer bevorzugten Ausgestaltung verfügt das steuerbare Ventil über einen elektromechanischen Antrieb, durch den beispielsweise ein Stellglied des steuerbaren Ventils bewegt werden kann. Dadurch ist es möglich, das Ventil zu öffnen oder zu schließen, wobei dies bevorzugt stufenlos geschieht. Der elektromechanische Antrieb ist bevorzugt durch den Energiewandler mit elektrischer Energie versorgbar. Die zum Betätigen des elektromechanischen Antriebes nötige elektrische Energie wird also durch den Energiewandler bereitgestellt.

Bevorzugt weist der Energiewandler eine Turbine auf, die in die Warmwasser-Leitung einsetzbar ist. Die Turbine wird durch das in der Warmwasser-Leitung fließende Trinkwasser in Rotation versetzt und treibt dadurch einen angeschlossenen Generator an, der den elektrischen Strom erzeugt. Auf diese Weise wird die kinetische Energie des fließenden Wassers in elektrische Energie in Form eines elektrischen Stromes umgewandelt. Alternativ oder zusätzlich dazu verfügt der Energiewandler über wenigstens ein thermoelektrisches Element, das aus einer Temperaturdifferenz, mithin also thermischer Energie, eine elektrische Spannung erzeugt.

Mithilfe der beigefügten Zeichnungen werden nachfolgend Ausführungsbeispiele der vorliegenden Erfindung näher erläutert. Es zeigt
- Figur 1 -: eine schematische Darstellung einer Trinkwasseranlage und
- Figur 2 -: eine schematische Schnittdarstellung durch ein Ventil.

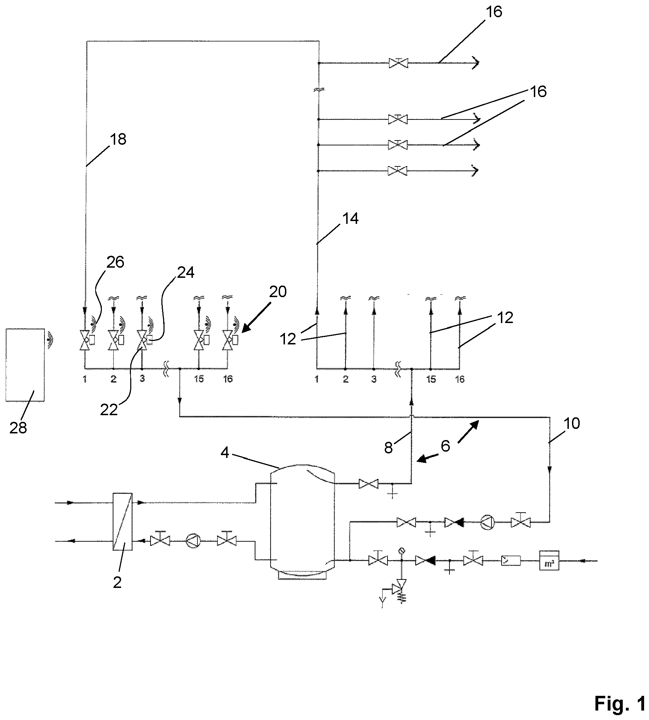

Figur 1 zeigt schematisch einen Schaltplan für eine Trinkwasseranlage gemäß einem Ausführungsbeispiel der vorliegenden Erfindung. In einem Heizkessel 2 wird warmes Trinkwasser erzeugt, das in einem Warmwasserspeicher 4 gespeichert wird. Am Warmwasserspeicher 4 beginnt eine Warmwasser-Zirkulationsleitung 6, die einen Vorlauf 8 und einen Rücklauf 10 aufweist. Die Warmwasser-Zirkulationsleitung 6 verfügt über mehrere Abzweigleitungen 12, die im gezeigten Ausführungsbeispiel von 1 bis 16 durchnummeriert sind und beispielsweise Steigleitungen in Gebäuden oder in Gebäudeteilen sein können. Sie verfügen über einen Steigleitungsvorlauf 14, von dem im gezeigten Ausführungsbeispiel Stichleitungen 16 abzweigen, die nicht mehr Teil der Warmwasser-Zirkulationsleitung 6 sind und beispielsweise zu einzelnen Wohnungen führen. Über Steigleitungsrückläufe 18, die sich zum Rücklauf 10 der Warmwasser-Zirkulationsleitung 6 verbinden, wird das warme Trinkwasser zurück in den Warmwasserspeicher 4 geleitet.

Jede Abzweigleitung 12 verfügt im gezeigten Ausführungsbeispiel im Bereich der Steigleitungsrückläufe 18 über jeweils eine Steuereinrichtung 20, die über jeweils ein steuerbares Ventil 22, ein thermoelektrisches Element 24 und eine Kommunikationseinrichtung 26 verfügt. Mittels der Kommunikationseinrichtung 26 können die vom nicht dargestellten Temperatursensor, der ebenfalls Teil der Steuereinrichtung 20 ist, ermittelten Messwerte und Daten an eine elektronische Datenverarbeitungseinrichtung 28 übermittelt werden. Diese ist eingerichtet, ebenfalls mittels einer drahtlosen Kommunikation Steuersignale an die Kommunikationseinrichtung 26 zu übermitteln, die verwendet werden, um die steuerbaren Ventile 22 der verschiedenen Steuereinrichtungen 20 zu steuern.

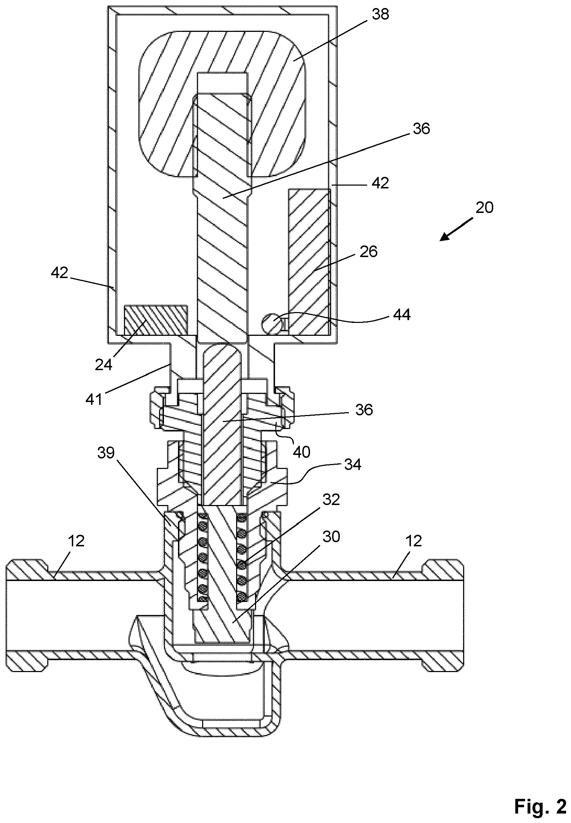

Figur 2 zeigt eine schematische Schnittdarstellung durch eine Steuereinrichtung 20. Sie ist in die Abzweigleitung 12 eingesetzt und verfügt über ein steuerbares Ventil. Dieses verfügt über einen Ventilstößel 30, der im gezeigten Ausführungsbeispiel nach oben und unten verschoben werden kann, wodurch die Durchflussmenge, die durch die Abzweigleitung 12 fließen kann, beeinflusst wird. Der Ventilstößel 30 ist durch eine Druckfeder 32 an einem ersten Befestigungselement 34 federgelagert. Der Ventilstößel 30 kann im gezeigten Ausführungsbeispiel über zwei Verschiebebolzen 36 verschoben werden, wofür ein Antrieb 38 vorhanden ist.

In der gezeigten Ausführungsvariante kommt der Ventilstößel 30 mit dem warmen Wasser, welches durch die Abzweigleitung 12 fließt, in Kontakt und erwärmt sich entsprechend. Der Ventilstößel 30 ist in thermischem Kontakt mit dem thermoelektrischen Element 24 und bildet die warme Seite dieses Elementes. Ein Gehäuse 42, das mit der Umgebungsluft in Kontakt ist, bildet die kalte Seite für das thermoelektrische Element 24. Das Gehäuse 42 ist über das erste Befestigungselement 34 und ein zweites Befestigungselement 40 an der Abzweigleitung 12 befestigt. Im Gehäuse 42 befindet sich zudem ein Temperatursensor 44, der ebenfalls mit dem warmen Wasser innerhalb der Abzweigleitung 12 in thermischem Kontakt steht. Er ist mit der Kommunikationseinrichtung 26 verbunden, die eingerichtet ist, drahtlos mit einer elektronischen Datenverarbeitungseinrichtung, die in Figur 2 nicht dargestellt ist, zu kommunizieren.

### Bezugszeichenliste

- 2: Heizkessel
- 4: Warmwasserspeicher
- 6: Warmwasser-Zirkulationsleitung
- 8: Vorlauf
- 10: Rücklauf
- 12: Abzweigleitung
- 14: Steigleitungsvorlauf
- 16: Steigleitung
- 18: Steigleitungsrücklauf
- 20: Steuereinrichtung
- 22: steuerbares Ventil
- 24: thermoelektrisches Element
- 26: Kommunikationseinrichtung
- 28: elektronische Datenverarbeitungseinrichtung
- 30: Ventilstößel
- 32: Druckfeder
- 34: erstes Befestigungselement
- 36: Verschiebebolzen
- 38: Antrieb
- 40: zweites Befestigungselement
- 42: Gehäuse
- 44: Temperatursensor

## Patentansprüche

1. Verfahren zum Betreiben einer Trinkwasseranlage, die
- eine Warmwasser-Leitung mit wenigstens einer Abzweigleitung und
- eine Steuereinrichtung mit
- einem Temperatursensor zum Bestimmen der Wassertemperatur in der Warmwasser-Leitung,
- einem Energiewandler zum Umwandeln thermischer Energie oder kinetischer Energie in elektrische Energie,
- einem steuerbaren Ventil und
- einer Kommunikationseinrichtung aufweist,
wobei bei dem Verfahren
- die Wassertemperatur mittels des Temperatursensors gemessen und
- mittels der Kommunikationseinrichtung drahtlos an eine elektronische Datenverarbeitungseinrichtung übermittelt wird,
- ein Steuersignal an die Kommunikationseinrichtung der Steuereinrichtung übermittelt wird,
- das steuerbare Ventil in Abhängigkeit des übermittelten Steuersignals gesteuert wird,
wobei die für den Temperatursensor und die Kommunikationseinrichtung nötige elektrische Energie durch den Energiewandler erzeugt wird,
**dadurch gekennzeichnet, dass** die Kommunikationseinrichtung eine LORA-Schnittstelle und die Steuereinrichtung einen elektrischen Energiespeicher aufweist.

2. Verfahren nach Anspruch 1, **dadurch gekennzeichnet, dass** die Warmwasser-Leitung eine Warmwasser-Zirkulationsleitung ist.

3. Verfahren nach Anspruch 1 oder 2, **dadurch gekennzeichnet, dass** elektronische Datenverarbeitungseinrichtung die gemessene Wassertemperatur mit einer hinterlegten Soll-Temperatur vergleicht und das Steuersignal in Abhängigkeit des Ergebnisses dieses Vergleichs übermittelt wird.

4. Verfahren nach einem der vorstehenden Ansprüche, **dadurch gekennzeichnet, dass** die Steuereinrichtung an der Abzweigleitung angeordnet ist, so dass durch das steuerbare Ventil eine Durchflussmenge durch die Abzweigleitung steuerbar ist.

5. Verfahren nach einem der vorstehenden Ansprüche, **dadurch gekennzeichnet, dass** die Warmwasser-Leitung mehrere Abzweigleitungen aufweist und an jeder Abzweigleitung eine Steuereinrichtung angeordnet ist.

6. Verfahren nach einem der vorstehenden Ansprüche, **dadurch gekennzeichnet, dass** die Kommunikationseinrichtung eingerichtet ist, durch wenigstens eine Mauer, bevorzugt wenigstens eine Brandschutzmauer, drahtlos mit der elektronischen Datenverarbeitungseinrichtung zu kommunizieren.

7. Trinkwasseranlage mit einer Warmwasser-Leitung mit wenigstens einer Abzweigleitung, einer elektronischen Datenverarbeitungseinrichtung und einer Steuereinrichtung, die einen Temperatursensor zum Bestimmen der Wassertemperatur in der Warmwasser-Leitung, einen Energiewandler zum Umwandeln thermischer Energie oder kinetischer Energie in elektrische Energie, einen elektrischen Energiespeicher, ein steuerbares Ventil und eine Kommunikationseinrichtung mit einer LORA-Schnittstelle aufweist, wobei die Trinkwasseranlage eingerichtet ist zum Durchführen eines Verfahrens nach einem der vorstehenden Ansprüche.

8. Trinkwasseranlage nach Anspruch 7, **dadurch gekennzeichnet, dass** die Warmwasser-Leitung mehrere Abzweigleitungen aufweist und an jeder Abzweigleitung eine Steuereinrichtung angeordnet ist, wobei sich die Abzweigleitungen vorzugsweise in unterschiedlichen Gebäude, in unterschiedlichen Räumen und/oder in unterschiedlichen Brandabschnitten befinden.

9. Steuereinrichtung für eine Trinkwasseranlage nach Anspruch 7 oder 8, wobei die Steuereinrichtung einen Temperatursensor, einen Energiewandler zum Umwandeln thermischer Energie oder kinetischer Energie in elektrische Energie, einen elektrischen Energiespeicher, ein steuerbares Ventil und eine Kommunikationseinrichtung mit einer LORA-Schnittstelle aufweist.

10. Steuereinrichtung nach Anspruch 9, **dadurch gekennzeichnet, dass** die Kommunikationseinrichtung eine Schnittstelle für eine drahtlose Kommunikation, insbesondere eine Bluetooth-Schnittstelle und/ohne eine WLAN-Schnittstelle aufweist.

11. Steuereinrichtung nach Anspruch 9 oder 10, **dadurch gekennzeichnet, dass** die Steuereinrichtung einen Speicher zum Speichern elektrischer Energie, insbesondere einen Kondensator und/oder einen Akku aufweist.

12. Steuereinrichtung nach einem der Ansprüche 9 bis 11, **dadurch gekennzeichnet, dass** die Steuereinrichtung einen elektronischen Datenspeicher und eine elektronische Datenverarbeitungseinrichtung aufweist.

13. Steuereinrichtung nach einem der Ansprüche 9 bis 12, **dadurch gekennzeichnet, dass** das steuerbare Ventil einen elektromechanischen Antrieb aufweist, der durch den Energiewandler mit elektrischer Energie versorgbar ist.

14. Steuereinrichtung nach einem der Ansprüche 9 bis 13, **dadurch gekennzeichnet, dass** der Energiewandler eine Turbine aufweist, die in die Warmwasser-Leitung einsetzbar ist, und/oder ein thermoelektrisches Element aufweist.

## Claims

1. A method for operating a drinking water installation comprising
- a warm water line with at least one branch line and
- a control device with
- a temperature sensor for determining the water temperature in the warm water line,
- an energy converter for converting thermal energy or kinetic energy into electrical energy,
- a controllable valve and
- a communication device,
the method comprising
- measuring the water temperature by means of the temperature sensor and
- wirelessly transmitting it by means of the communication device to an electronic data processing device,
- transmitting a control signal to the communication device of the control device,
- controlling the controllable valve depending on the transmitted control signal,
the electrical energy required for the temperature sensor and the communication device being generated by the energy converter,
**characterised in that** the communication device comprises a LoRa interface and the control device an electrical energy store.

2. The method according to claim 1, **characterised in that** the warm water line is a warm water circulation line.

3. The method according to claim 1 or 2, **characterised in that** the electronic data processing device compares the measured water temperature with a stored target temperature and the control signal is transmitted depending on the result of said comparison.

4. The method according to one of the preceding claims, **characterised in that** the control device is arranged on the branch line such that a through-flow volume through the branch line can be controlled by way of the controllable valve.

5. The method according to one of the preceding claims, **characterised in that** the warm water line comprises multiple branch lines and a control device is arranged on each branch line.

6. The method according to one of the preceding claims, **characterised in that** the communication device is configured to wirelessly communicate with the electronic data processing device through at least one wall, preferably a firewall.

7. A drinking water installation with a warm water line with at least one branch line, an electronic data processing device and a control device that comprises a temperature sensor for determining the water temperature in the warm water line, an energy converter for converting thermal energy or kinetic energy into electrical energy, an electrical energy store, a controllable valve and a communication device with a LoRa interface, the drinking water installation being configured to carry out a method according to one of the preceding claims.

8. The drinking water installation according to claim 7, **characterised in that** the warm water line comprises multiple branch lines and a control device is arranged on every branch line, the branch lines preferably being located in different buildings, in different rooms and/or in different fire compartments.

9. A control device for a drinking water installation according to claim 7 or 8, the control device comprising a temperature sensor, an energy converter for converting thermal energy or kinetic energy into electrical energy, an electrical energy store, a controllable valve and a communication device with a LoRa interface.

10. The control device according to claim 9, **characterised in that** the communication device comprises an interface for wireless communication, in particular a Bluetooth interface and/or a WiFi interface.

11. The control device according to claim 9 or 10, **characterised in that** the control device comprises a store for storing electrical energy, in particular a capacitor and/or a rechargeable battery.

12. The control device according to one of the claims 9 to 11, **characterised in that** the control device comprises an electronic memory and an electronic data processing device.

13. The control device according to one of the claims 9 to 12, **characterised in that** the controllable valve comprises an electromagnetic drive that can be supplied with electrical energy by the energy converter.

14. The control device according to one of the claims 9 to 13, **characterised in that** the energy converter comprises a turbine, which can be used in the warm water line, and/or a thermoelectric element.

## Revendications

1. Procédé d'exploitation d'une installation d'eau potable comprenant
- une conduite d'eau chaude avec au moins une conduite de dérivation et
- un dispositif de commande avec
- un capteur de température pour déterminer la température de l'eau dans la conduite d'eau chaude,
- un convertisseur d'énergie pour convertir l'énergie thermique ou l'énergie cinétique en énergie électrique,
- une vanne commandable et
- un dispositif de communication,
procédé dans lequel
- la température de l'eau est mesurée à l'aide du capteur de température et
- est transmise sans fil à un dispositif électronique de traitement de données au moyen du dispositif de communication,
- un signal de commande est transmis au dispositif de communication du dispositif de commande,
- la vanne commandable est commandée en fonction du signal de commande transmis,
l'énergie électrique nécessaire pour le capteur de température et pour le dispositif de communication étant générée par le convertisseur d'énergie,
**caractérisé en ce que** le dispositif de communication présente une interface LORA, et le dispositif de commande comprend un dispositif de stockage d'énergie électrique.

2. Procédé selon la revendication 1,
**caractérisé en ce que** la conduite d'eau chaude est une conduite de circulation d'eau chaude.

3. Procédé selon la revendication 1 ou 2,
**caractérisé en ce que** le dispositif électronique de traitement de données compare la température d'eau mesurée à une température de consigne mémorisée, et le signal de commande est transmis en fonction du résultat de cette comparaison.

4. Procédé selon l'une des revendications précédentes,
**caractérisé en ce que** le dispositif de commande est disposé sur la conduite de dérivation, de sorte que la vanne commandable permet de commander un débit à travers la conduite de dérivation.

5. Procédé selon l'une des revendications précédentes,
**caractérisé en ce que** la conduite d'eau chaude comprend plusieurs conduites de dérivation, et un dispositif de commande est disposé sur chaque conduite de dérivation.

6. Procédé selon l'une des revendications précédentes,
**caractérisé en ce que** le dispositif de communication est conçu pour communiquer sans fil avec le dispositif électronique de traitement de données à travers au moins un mur, de préférence au moins un mur coupe-feu.

7. Installation d'eau potable comprenant une conduite d'eau chaude avec au moins une conduite de dérivation, un dispositif électronique de traitement de données et un dispositif de commande qui comprend un capteur de température pour déterminer la température de l'eau dans la conduite d'eau chaude, un convertisseur d'énergie pour convertir l'énergie thermique ou l'énergie cinétique en énergie électrique, un dispositif de stockage d'énergie électrique, une vanne commandable et un dispositif de communication muni d'une interface LORA,
l'installation d'eau potable étant conçue pour mettre en oeuvre un procédé selon l'une des revendications précédentes.

8. Installation d'eau potable selon la revendication 7,
**caractérisée en ce que** la conduite d'eau chaude présente plusieurs conduites de dérivation, et un dispositif de commande est disposé sur chaque conduite de dérivation, les conduites de dérivation se trouvant de préférence dans différents bâtiments, dans différents locaux et/ou dans différentes sections coupe-feu.

9. Dispositif de commande pour une installation d'eau potable selon la revendication 7 ou 8,
dans lequel le dispositif de commande comprend un capteur de température, un convertisseur d'énergie pour convertir l'énergie thermique ou l'énergie cinétique en énergie électrique, un dispositif de stockage d'énergie électrique, une vanne commandable et un dispositif de communication muni d'une interface LORA.

10. Dispositif de commande selon la revendication 9,
**caractérisé en ce que** le dispositif de communication présente une interface pour une communication sans fil, en particulier une interface Bluetooth et/ou une interface WLAN.

11. Dispositif de commande selon la revendication 9 ou 10,
**caractérisé en ce que** le dispositif de commande comporte un dispositif de stockage pour stocker de l'énergie électrique, en particulier un condensateur et/ou un accumulateur.

12. Dispositif de commande selon l'une des revendications 9 à 11,
**caractérisé en ce que** le dispositif de commande comporte une mémoire électronique de données et un dispositif électronique de traitement de données.

13. Dispositif de commande selon l'une des revendications 9 à 12,
**caractérisé en ce que** la vanne commandable comporte un entraînement électromécanique pouvant être alimenté en énergie électrique par le convertisseur d'énergie.

14. Dispositif de commande selon l'une des revendications 9 à 13,
**caractérisé en ce que** le convertisseur d'énergie comprend une turbine, apte à être insérée dans la conduite d'eau chaude, et/ou comprend un élément thermoélectrique.
